# EUROPÄISCHE PATENTSCHRIFT

(11) **EP 0 420 809 B1**
(45) Veröffentlichungstag und Bekanntmachung des Hinweises auf die Patenterteilung: **16.06.1993**
(21) Anmeldenummer: 90810715.4
(22) Anmeldetag: 19.09.1990
(51) Int. Cl.: A47J 37/07

(54) **Garnitur zur Verwendung am Camping-Feuer**
Accessories to be used with a campfire
Garniture à utiliser au feu de camp

(30) Priorität: 28.09.1989 CH 3515/89
(43) Veröffentlichungstag der Anmeldung: 03.04.1991
(73) Patentinhaber: Wolf Handels AG, CH-4106 Therwil (CH)
(72) Erfinder: Wolf, Christoph, CH-4106 Therwil (CH)
(74) Vertreter: Eder, Carl E.

(56) Entgegenhaltungen:
- CH-A- 351 381
- CH-A- 362 817
- DE-U- 8 702 108
- FR-A- 2 353 260
- FR-A- 2 479 676
- GB-A- 2 130 081
- US-A- 2 682 830
- US-A- 3 344 780
- US-A- 4 691 626

## Beschreibung

Zum Grillieren am Camping-Feuer werden Roste oder Spiesse verwendet. Der Nachteil dieser bekannten Hilfsmittel besteht darin, dass sie beim Transport verhältnismässig viel Platz benötigen, da es sich um sperrige Gegenstände handelt. Ein weiterer Nachteil besteht darin, dass sich weder ein bekannter Grillspiess noch ein bekannter Grillrost für etwas anderes verwenden lässt.

All diese Nachteile weist nun die zur Verwendung am Camping-Feuer dienende Garnitur nicht mehr auf. Sie ist dadurch gekennzeichnet, dass sie aus mindestens folgenden Teilen besteht:
- einer Kurbel,
- drei am einen Ende mit einer Spitze versehenen Stäben von im wesentlichen gleicher Länge und gleicher Dicke d, von denen jeder in mindestens drei im wesentlichen gleich lange Teilstäbe zerlegbar ist,
   = wobei zwei Stäbe an ihrem der Spitze abgewandten Ende mit einem Haken oder einer Oese zum Einlegen des dritten Stabes versehen sind und
   = wobei die Kurbel und das der Spitze abgewandte Ende des dritten Stabes so ausgebildet sind, dass sie sich fest aber lösbar miteinander verbinden lassen,
- einem Ring, dessen Innendurchmesser unwesentlich grösser als 2,15 d ist, so dass sich die drei Stäbe zusammen mit geringem Spiel in den Ring stecken lassen, und
- einer mindestens am einen Ende mit einem Haken versehenen Kette.

In den abhängigen Ansprüchen sind besondere Ausführungsarten der Erfindung angegeben.

Nachfolgend werden anhand der beiliegenden Zeichnung ein Ausführungsbeispiel der erfindungsgemässen Camping-Garnitur und einer Erweiterung dieser Garnitur beschrieben. In der Zeichnung zeigt
die Figur 1 eine erste Möglichkeit für deren Benützung,
die Figur 2 in kleinerem Massstab eine weitere Möglichkeit für deren Benützung,
die Figur 3 das in der Fig. 1 mit III bezeichnete Detail in grösserem Massstab und
die Figur 4 eine weitere Ausgestaltung der erfindungsgemässen Grillgarnitur in der Gebrauchsstellung.

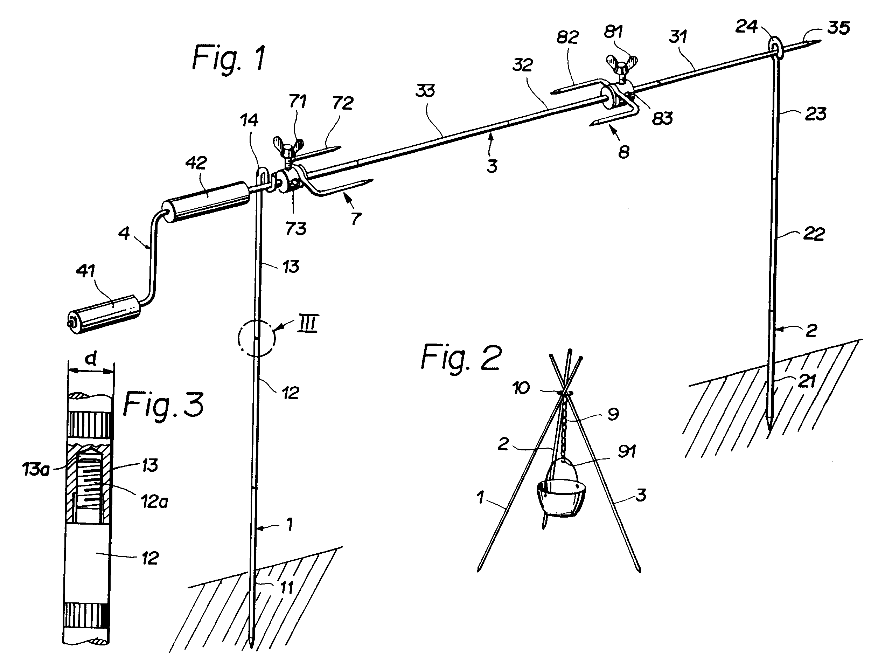

Zur Garnitur gehören drei im wesentlichen gleich lange Stäbe 1, 2 und 3, von denen jeder am einen Ende mit einer Spitze versehen ist. In der in der Figur 1 dargestellten Benützungsart, sind die beiden Stäbe 1 und 2 in den Boden eingesteckt. Die Spitze des dritten Stabes ist mit 35 bezeichnet.

Jeder der drei Stäbe ist aus je drei Teilstäben zusammengeschraubt, der Stab 1 also aus den Teilstäben 11, 12 und 13, der Stab 2 aus den Teilstäben 21, 22 und 23 und der Stab 3 aus den Teilstäben 31, 32 und 33. Aus der Fig. 3 ist ersichtlich, wie die Teilstäbe 12 und 13 miteinander verbunden sind. Der Teilstab 12 weist an seinem einen Ende einen Gewindezapfen 12a auf, der in der Gewindebohrung 13a des Teilstabes 13 eingeschraubt ist. Auf diese Art und Weise sind im vorliegenden Ausführungsbeispiel alle einen Stab bildenden Teilstäbe miteinander verbunden, wobei der mittlere Teilstab zweckmässigerweise auf der einen Seite ein Innen- und auf der anderen Seite ein Aussengewinde aufweist. Die Enden der andern Teilstäbe sind dann entsprechend ausgebildet. Der Stab 1 weist an seinem der Spitze abgewandten Ende einen Haken 14 auf, der Stab 2 eine Oese 24. Der Haken 14 und die Oese 24 dienen dazu, dass der dritte Stab 3 frei drehbar gelagert werden kann. Auf diesem dritten Stab 3 ist an dem der Spitze 35 abgewandten Ende eine Kurbel 4 aufgeschraubt, mit einem auf ihr drehbar gelagerten Kurbelgriff 41 und einem ebenfalls drehbar gelagerten Handgriff 42. Der Stab 3 dient nun als Grillspiess, also zum Aufspiessen der zum Grillieren bestimmten Esswaren. Es können auf ihm selbstverständlich die an sich bei Grillspiessen bekannten Fleischklammern 7 und 8 aufgeschoben und mittels ihrer Schrauben 71 bzw. 81 arretiert werden. Jede dieser Fleischklammern 7 bzw. 8 weist eine mit der Klemmschraube 71 bzw. 81 versehene Hülse 73 bzw. 83 auf, an welcher eine U-förmige Fleischnadel 72 bzw. 82 befestigt ist.

Zum Transport wird vorerst die Kurbel 4 vom Grillspiess 3 losgeschraubt, dann wird jeder der drei Stäbe in seine drei Teilstäbe zerlegt, was zur Folge hat, dass sich die ganze Einrichtung an einem minimalen, überall vorhandenen Transportplatz unterbringen lässt.

Die Figur 2 zeigt eine weitere Verwendung der erfindungsgemässen Garnitur: Die drei Stäbe 1, 2 und 3, die alle den gleichen Durchmesser d aufweisen, werden hier durch einen Ring 10 zusammengehalten, dessen Innendurchmesser D unwesentlich grösser ist als 2,15 d, so dass sich die drei Stäbe mit nur ganz geringem Spiel gemeinsam in den Ring 10 stecken lassen. Wenn die drei Stäbe dann gespreizt werden, wie das in der Figur 2 dargestellt ist, erhält man ein solides Dreibein, das dazu dient, mittels einer mit einem Haken 91 versehenen Kette 9 einen Topf über ein Feuer zu hängen. Im Unterschied zu den bekannten Dreibeinen ist es auch hier wegen der Zerlegbarkeit der Stäbe möglich, die ganze Einrichtung an einem kleinsten Ort unterzubringen.

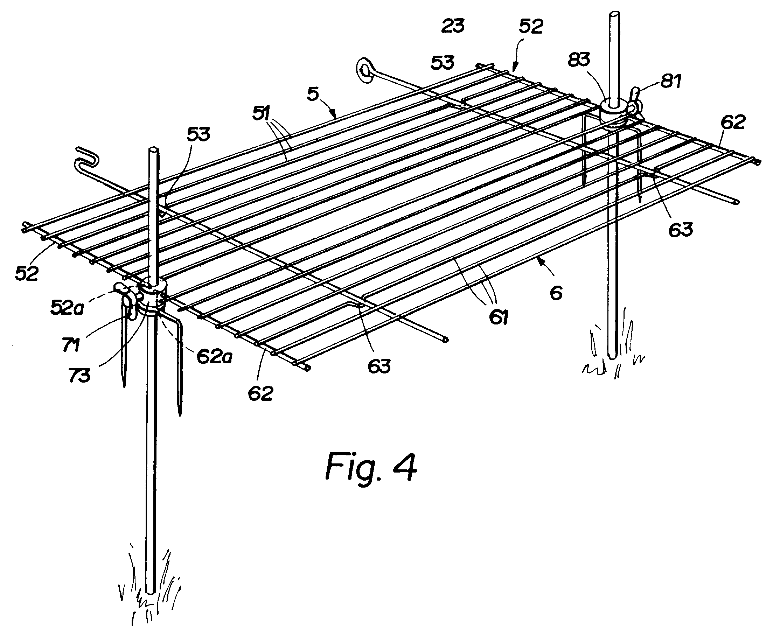

Die Figur 4 zeigt nun eine weitere Ausgestaltung der erfindungsgemässen Garnitur zur Verwendung am Campingfeuer: Sie weist zusätzlich zwei Grillrosthälften 5 und 6 auf. Hier besteht jede dieser Hälften aus acht Roststäben 51 bzw. 61, die durch zwei Endstäbe 52 bzw. 62 starr miteinander verbunden sind. Diese beiden Endstäbe weisen nun je ein freies Ende 52a bzw. 62a auf, das sich in eine in der Hülse 73 bzw. 83 angebrachten Bohrung einstecken lässt, wie das in der Zeichnung dargestellt ist. Da sich dadurch jedoch nicht die für einen Grillrost nötige Stabilität erzielen lässt, sind einzelne der Roststäbe 51 und 61 an den Stäben 53 bzw. 63 so gewellt, dass sich mindestens zwei der Teilstäbe, hier also die Teilstäbe 13 und 23, derart in den Rost einstecken lassen, dass sie zu seiner Ebene parallel, aber senkrecht zu den Roststäben 51 und 61 verlaufen. Dadurch lässt sich eine Versteifung erreichen, die für das Grillieren auf dem Rost völlig hinreichend ist. Da auch diese zusätzlichen Grillrosthälften keine grossen Abmessungen aufweisen müssen, lässt sich die durch diese Hälften erzeugte Garnitur immer noch an einem sehr kleinen Ort unterbringen.

## Patentansprüche

1. Garnitur zur Verwendung am Camping-Feuer, dadurch gekennzeichnet, dass sie aus mindestens folgenden Teilen besteht:
- einer Kurbel (4),
- drei am einen Ende mit einer Spitze versehenen Stäben (1, 2, 3) von im wesentlichen gleicher Länge und gleicher Dicke d, von denen jeder in mindestens drei im wesentlichen gleich lange Teilstäbe (11, 12, 13; 21, 22, 23; 31, 32, 33) zerlegbar ist,
= wobei zwei Stäbe (1, 2) an ihrem der Spitze abgewandten Ende mit einem Haken (14) oder einer Oese (24) zum Einlegen des dritten Stabes (3) versehen sind und
= wobei die Kurbel (4) und das der Spitze abgewandte Ende des dritten Stabes (3) so ausgebildet sind, dass sie sich fest aber lösbar miteinander verbinden lassen,
- einem Ring (10), dessen Innendurchmesser D unwesentlich grösser als 2,15 d ist, so dass sich die drei Stäbe (1, 2, 3) zusammen mit geringem Spiel in den Ring (10) stecken lassen, und
- einer mindestens am einen Ende mit einem Haken versehenen Kette (9).

2. Garnitur nach Anspruch 1, dadurch gekennzeichnet, dass jeder der drei Stäbe aus drei ineinander eingeschraubten Teilstäben besteht.

3. Garnitur nach einem der Ansprüche 1 oder 2, dadurch gekennzeichnet, dass die Kurbel (4) und der dritte Stab (3) mit zusammenschraubbaren Gewinden versehen sind.

4. Garnitur nach einem der Ansprüche 1 bis 3, dadurch gekennzeichnet, dass sie zwei auf einem der Stäbe aufschiebbare und auf ihm festklemmbare Fleischklammern (7, 8) aufweist.

5. Garnitur nach Anspruch 4, dadurch gekennzeichnet, dass sie zwei mit den Fleichklammern verbindbare Grillrosthälften aufweist, bei welchen einzelne Röststabe so gewellt sind, dass sich mindestens zwei Teilstäbe in den Rost parallel zu seiner Ebene einstecken lassen um die mit den Klammern verbundenen Hälften in einer Ebene zu stabilisieren.

## Claims

1. Accessory for use at camp fires, characterised thereby that it consists of at least the following parts:
- a crank (4),
- three rods (1, 2, 3) of substantially the same length and same thickness d, which are provided at one end with a point and each of which can be broken down into at least three part rods (11, 12, 13; 21, 22, 23; 31, 32, 33) of substantially equal length,
= wherein two rods (1, 2) are provided at their ends remote from the point with a hook (14) or an eye (24) for the insertion of the third rod (3) and
= wherein the crank (4) and the end, which is remote from the point, of the third rod (3) are so constructed that they can be firmly but detachably connected together,
- a ring (10) the inner diameter D of which is negligibly greater than 2.15d, so that the three rods (1, 2, 3) can together be plugged with small play into the ring (10), and
- a chain (9) provided with a hook at at least one end.

2. Accessory according to claim 1, characterised thereby that each of the three rods consists of three part rods screwed into one another.

3. Accessory according to one of claims 1 and 2, characterised thereby that the crank (4) and the third rod (3) are provided with threads screwable together.

4. Accessory according to one of claims 1 to 3, characterised thereby that it comprises two meat clamps (7, 8) pushable onto one of the rods and firmly clampable thereon.

5. Accessory according to claim 4, characterised thereby that it comprises two grilling grid halves, which are connectible with the meat clamps and in which individual grid bars are so waved that at least two part rods can be inserted into the grid parallel to its plane in order to stabilise in one place the halves connected by the clamps.

## Revendications

1. Ensemble pour camping, destiné à être utilisé sur un feu de camp, caractérisé en ce qu'il est constitué d'au moins les éléments suivants :
- une manivelle (4),
- trois tiges (1, 2, 3), qui sont pourvues d'une pointe à l'une de leurs extrémités et ont des longueurs pratiquement égales et des épaisseurs d pratiquement égales et dont chacune est agencée de façon à pouvoir être décomposée en au moins trois éléments de tige (11, 12, 13; 21, 22, 23 ; 31, 32, 33) ayant des longueurs pratiquement égales,
- deux (1, 2) des tiges étant pourvues, à leur extrémité opposée à la pointe, d'un crochet (14) ou d'un oeillet (24) servant à recevoir la troisième tige (3) et
- la manivelle (4) et l'extrémité de la troisième tige (3) qui est située à l'opposé de la pointe étant agencées de façon à pouvoir être réunies l'une à l'autre solidement, mais d'une manière amovible,
- un anneau (10), dont le diamètre intérieur D est supérieur de peu à 2,15 d, de sorte que les trois tiges (1, 2, 3) peuvent être enfilées ensemble dans l'anneau (10) avec un faible jeu, et
- une chaîne (9) pourvue d'un crochet à au moins une extrémité.

2. Ensemble suivant la revendication 1, caractérisé en ce que chacune des trois tiges est constituée de trois éléments vissés les uns dans les autres.

3. Ensemble suivant l'une des revendications 1 et 2, caractérisé en ce que la manivelle (4) et la troisième tige (3) sont pourvues de filetages pouvant être assemblés par vissage.

4. Ensemble suivant l'une des revendications 1 à 3, caractérisé en ce qu'il comporte deux pinces à viande (7, 8) agencées de façon à pouvoir être enfilées sur l'une des tiges et à pouvoir être serrées sur cette dernière.

5. Ensemble suivant la revendication 4, caractérisé en ce qu'il comprend deux moitiés de gril qui sont agencées de façon à pouvoir être fixées sur les pinces à viande et dont certaines tiges présentent une ondulation, de sorte qu'au moins deux éléments de tige peuvent être enfilés dans le gril parallèlement à son plan de façon à stabiliser dans ce plan les moitiés de gril fixées sur les pinces.
